(19) European Patent Office

Europäisches Patentamt

European Patent Office

Office européen des brevets

(11) **EP 1 065 693 A2**

(12) **EUROPEAN PATENT APPLICATION**

(43) Date of publication:
**03.01.2001 Bulletin 2001/01**

(51) Int. Cl.$^7$: **H01J 17/49**, H01J 9/24,
C03C 8/20, H01B 3/08

(21) Application number: **00113101.0**

(22) Date of filing: **27.06.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **30.06.1999 JP 18574399**
**31.03.2000 JP 2000098713**
**31.03.2000 JP 2000098714**

(71) Applicant:
**Sumitomo Chemical Company, Limited**
**Chuo-ku Osaka 541-8550 (JP)**

(72) Inventors:
• **Saegusa, Kunio**
**Tsukuba-gun, Ibaraki (JP)**
• **Tanaka, Shinichiro**
**Funabashi-shi, Chiba (JP)**

(74) Representative:
**VOSSIUS & PARTNER**
**Siebertstrasse 4**
**81675 München (DE)**

(54) **Glass paste**

(57) The present invention provides a glass paste comprising a magnesium titanate powder. The present invention provides a glass paste comprising a magnesium titanate powder, wherein the magnesium titanate powder has a primary particle size based on a SEM photograph of from 0.1μm or more to 10μm or less, and a BET specific surface area of from 0.1m$^2$/g or more to 10m$^2$/g or less. Glass paste suitable for forming barrier ribs in plasma display panels.

**EP 1 065 693 A2**

**Description**

The present invention relates to a glass paste comprising a magnesium titanate powder. More specifically, the present invention relates to a glass paste obtained by compounding a magnesium titanate powder into a glass powder, which is suitable for forming a barrier rib formed on a glass substrate of a plasma flat panel display (hereinafter, referred to as PDP).

PDP is a flat panel display which is thin and light and can realize large area image. PDP is expected to be used as a large area television and a wall-mounting television in the future.

One of the present problems of PDP is low brightness of the image plane, and application methods of phosphors and forming method of barrier ribs have been investigated, for example, to improve the brightness.

A barrier rib is formed by molding a glass powder, then sintering the molded article to vitrify. It has been suggested to add an inorganic powder such as alumina, zircon and the like to the above-mentioned glass powder for the purpose of keeping the molded form of the glass in a melted condition in the sintering process after the barrier rib is formed with the glass powder.

Japanese Patent Application Laid-Open (JP-A) No. 8-321257 discloses addition of titania and the like as a heat resistant white pigment to whiten a barrier rib, for the purpose of effectively reflecting the emission of phosphors to the front panel. Titanium dioxide (titania) has a dielectric constant of 100 to 110 in rutile type and of 50 in anatase type, and the dielectric constant thereof is too high to be added to a glass material for a barrier rib of PDP. A low dielectric constant barrier rib material has been investigated to lower the capacitance of a PDP cell.

As described above, glass materials containing silica, alumina, titania or zirconia have been studied as a barrier rib material. However, none of them have both a high refractive index and a low dielectric constant at the same time.

When searching for a glass material which does not have the above-described problems, it has been found that a glass paste containing magnesium titanate has high refractive index and low dielectric constant.

That is, the present invention relates to a glass paste comprising a magnesium titanate powder.

The present invention also relates to a glass paste comprising a magnesium titanate powder, wherein the magnesium titanate powder has a primary particle size based on a SEM photograph of from 0.1 $\mu$m or more to 10 $\mu$m or less, and a BET specific surface area of from 0.1 m$^2$/g or more to 10 m$^2$/g or less.

Magnesium titanate to be contained in the glass paste of the present invention has a dielectric constant of 18 (literature value), and the refractive index of as high values as 2.2 to 2.3 has been obtained. Consequently, it was found that a glass paste comprising magnesium titanate is suitable as a material for a barrier rib of PDP.

From the standpoint of mixing with a glass powder, magnesium titanate has a similar particle size to the glass powder. The primary particle size of magnesium titanate powder based on an SEM photograph is preferably from 0.1 $\mu$m or more to 10 $\mu$m or less, and more preferably from 0.3 to 5 $\mu$m. When the primary particle size is less than 0.1 $\mu$m or over 10 $\mu$m, mixing with the glass powder may not be conducted suitably. Regarding the particle morphology, a polyhedral form is more suitable for reflection and scattering than a spherical form.

The lower BET specific surface area means a larger particle size and a smoother surface of a particle. The BET specific surface area of magnesium titanate powder is preferably from 0.1 m$^2$/g or more to 10 m$^2$/g or less, and further preferably from 0.3 to 5 m$^2$/g.

Further, a magnesium titanate powder having a value obtained by dividing the primary particle size based on a SEM photograph by a primary particle size calculated from the BET specific surface is preferably from 0.1 or more to 5 or less, more preferably from 0.5 or more to 1.5 or less. Thus, a magnesium titanate powder having less aggregate is preferable.

For calculation of the particle size from the BET specific surface area, a particle size is obtained by the following formula: 6 (constant) $\div$ 3.9 (theoretical density of magnesium titanate, unit; g/cm$^3$) $\div$ BET specific surface area (m$^2$/g). When a large number of aggregated particles are included, the specific surface area decreases due to mutual connection between the particle surfaces, and resultantly, a value obtained by dividing the primary particle size based on a SEM photograph by a primary particle size calculated from the BET specific surface decreases, therefore, the value is preferably 0.1 or more, more preferably 0.5 or more. An aggregated powder often causes a defect in a barrier rib when it is formed. On the other hand, when a particle morphology is irregular with many defects and dents and bulges are present on the surface, a value obtained by dividing the primary particle size based on a SEM photograph by a primary particle size calculated from the BET specific surface increases. The value is preferably 5 or less, more preferably 1.5 or less. When a lot of defects and dents and bulges are present on the surface, light reflection effect is not fully manifested.

Regarding the particle morphology, a polyhedral form without substantial fractured surface is more suitable for reflection and scattering than a spherical form. A particle of polyhedral form can be realized by a single crystal of magnesium titanate. In a single crystal , a crystal plane derived from the ordering of atoms emerges on the particle surface, and a polyhedral form is imparted to the particle. Since the crystal form of magnesium titanate is basically cubic, the number of surfaces is 6 or more. When the number of surfaces is over 30, the morphology becomes close to a sphere and the light reflection thereof does not differ from that of a spherical particle, therefore, the number of surfaces is preferably 30 or less.

The magnesium titanate powder of the present invention can be produced as described below.

For example, a raw material can be obtained by mixing a magnesium oxide powder or a magnesium hydroxide powder with an anatase or rutile type titanium dioxide powder. Alternatively, a raw material can also be obtained by mixing magnesium chloride or magnesium sulfate in wet condition with an anatase or rutile type titanium dioxide powder, and by drying the mixture. The raw material is then calcined in air at a temperature from 600 to 1200°C to produce an intended magnesium titanate powder.

Further, the magnesium titanate powder used in the present invention can also be produced as described below. The magnesium titanate powder can be obtained by mixing a powder obtained by drying a metatitanic acid slurry produced in a process for producing titanium dioxide according to a sulfuric acid method, or a titanium compound, which can be converted to titanium dioxide by heating, such as orthotitannate and the like produced by neutralization or hydrolysis of an aqueous titanium tetrachloride solution, with magnesium hydroxide, and calcining the mixture in an atmosphere containing hydrogen chloride in an amount of preferably 1 vol% or more, more preferably 10 vol% or more, at a temperature preferably from 600 to 1200°C, more preferably from 800 to 1100°C, for preferably from 10 minutes or more to 6 hours or less.

The magnesium titanate powder of the present invention is obtained by mixing titanium dioxide or a precursor which is converted to titanium dioxide by calcining with magnesium oxide or a precursor which is converted to magnesium oxide by calcining , and calcining the mixed raw materials in an atmosphere containing chlorine. The atmosphere containing chlorine is an atmosphere containing at least one gas selected from the following (a) to (c):

(a) Hydrogen chloride,
(b) Component prepared from molecular chlorine and steam,
(c) Molecular chlorine.

When the calcination atmosphere of the above-mentioned mixture is a hydrogen chloride gas atmosphere, the above-mentioned mixture is calcined in an atmosphere containing hydrogen chloride in an amount of preferably 1 vol% or more, more preferably 10 vol% or more, at a temperature preferably from 600 to 1200°C, more preferably from 900 to 1100°C, for preferably from 10 minute or more to 6 hours or less.

When the calcination atmosphere of the above-mentioned mixture is a gas atmosphere comprising a component prepared from molecular chlorine and steam, the above-mentioned mixture is calcined in an atmosphere containing preferably 0.5 vol% or more of molecular chlorine and 0.5 vol% or more of steam, more preferably 5 volt or more of molecular chlorine and 5 vol% or more of steam, at a temperature preferably from 600 to 1200°C, more preferably from 900 to 1100°C, for preferably from 10 minute or more to 6 hours or less.

When the calcination atmosphere of the above-mentioned mixture is a molecular chlorine gas atmosphere, the above-mentioned mixture is calcined in an atmosphere containing preferably 0.5 vol% or more of molecular chlorine, more preferably 5 vol% or more of molecular chlorine, at a temperature preferably from 600 to 1200°C, more preferably from 900 to 1100°C, for preferably from 10 minute or more to 6 hours or less.

In the calcination, an industrially used batch operation furnace, tunnel furnace and rotary kiln can be used, providing it is a furnace which can control a gas atmosphere. When the small particle size is desired, a fine magnesium titanate powder that acts as a seed crystal can be mixed to the above-mentioned raw material to decrease the particle size. When the large amount of the fine magnesium titanate powder is added , the particle size of the calcined powder becomes smaller.

Although the method for mixing a magnesium titanate powder into a glass paste for forming a barrier rib is not particularly restricted, it is necessary that the magnesium titanate powder is contained in uniformly and sufficiently dispersed condition, and a mixing in a dry condition or a wet mixing in which water or an organic solvent is added can be conducted, by a mixing method using a mixer equipped with a high speed stirring blade such as a vertical granulator,Lodige_mixer and the like, or using a media such as a ball mill and the like.

According to the present invention, a glass paste which is suitable for forming a barrier rib of a plasma display panel can be provided.

Various measurements in the present invention were conducted as follows.

1. Primary particle size based on SEM photograph

A particle photograph was taken using SEM (scanning electron microscope, manufactured by JEOL Ltd.: T-220), and 5 to 10 particles were selected from the photograph and the sizes thereof were measured and the average value was calculated.

2. BET specific surface area

The BET specific surface area was measured by a BET one point method using Flow Sorb II type 2300 manufactured by Micromeritics Instrument Co.

Example 1

A magnesium titanate powder was produced as described below. Water (4645 g) was added to 5223 g of an aqueous titanium tetrachloride solution( manufactured by Sumitomo Sitix of Amagasaki Inc. ). Titania (STR-60N: manufactured by Sakai Chemical Industry Co., Ltd.)(1.4 g) was weighed, and added to 70 g of water of which pH had been controlled to 2 by addition of hydrochloric acid, and dispersed by a ultrasonic homogenizer, then, the dispersion was added to the aqueous titanium tetrachloride solution. A pH electrode and a stirrer were mounted to a reaction vessel containing 3.3 kg of water. The above-mentioned aqueous titanium tetrachloride solution was added to the vessel by a tube pump, while, the pH of the solution was maintained at pH 2.7 by a pH controller that controlled another tube pump that provideed a 48 wt% sodium hydroxide aqueous solution to the reaction vessel and neutralization and precipitation reaction was conducted. Stirring was continued another 1 hour after completion of the reaction. The solution after the neutralization and precipitation contained white precipitates dispersed, and a cake of the precipitation was obtained by suction filtration using a filter paper, and water was poured on this and the suction filtration was conducted to rinse the cake. The resulted rinsed cake was dried in an oven set at 130°C to obtain a dried cake. To the resulted dried cake (10.9 g) were added 8.0 g of magnesium hydroxide and 25 g of isopropyl alcohol, and the mixture was charged into a 250 ml polyethylene pot together with plastic balls with iron cores, and they were ball milled for 2 hours. The resulted slurry was dried by using a rotary evaporator to obtain a powder. The powder (4 g) was charged into an alumina boat, and calcined in a furnace having a quartz tube. The temperature ramp rate was 10°C/min., and 30 ml/min. of HCl gas and 70 ml/min. of nitrogen gas were flowed (HCl concentration: 30 vol%) from 400°C, and kept at 950°C for 30 minutes, then, the HCl gas and nitrogen gas were stopped, and the powder was allowed to be cooled while flowing air at a rate of 100 ml/min.

The X-ray diffraction measurement showed that the resulted powder was composed of $MgTiO_3$ single phase. The product was mainly composed of polyhedral particles, and the average particle size calculated using an SEM photograph was 1.8 μm. The BET specific surface area was 0.54 $m^2$/g. The particle size was calculated from the literature value 3.9 g/$cm^3$ of the density of magnesium titanate and from the BET specific surface area. The particle size was 2.8 μm, and (average particle size based on SEM photograph)/(particle size calculated from BET specific surface area) was 0.6.

The glass addition test can be conducted as described below. The resulted magnesium titanate powder (2 g) and ASF-1340 (trade name)(8 g), glass powder manufactured by Asahi Glass Co. having a glass transition temperature of 420°C are ball milled for 1 hour using alumina balls and a 250 ml polyethylene pot . The resulting mixed powder is pressed into a pellet at a pressure of 300 kg/$cm^2$ using a 13 mm ∅ mold. A temperature ramp rate is 5°C/min. and the pellet is calcined at 600°C for 20 minutes in air. The dielectric constant of the resulting pellet calculated using a known calculation formula (Barium Titanate Jitsuyoka Kenkyukai, annual report, No. 13, XIV-74-Toku "Saikin no Kessho ka Garasu", Sumio Sakka, p. 18, formula D) is 14.

Example 2

The powder (mixture of titanium tetrachloride precipitates and magnesium hydroxide) used in Example 1 was calcined under the same conditions except that the calcining temperature was 1100°C. The X-ray diffraction measurement showed that the resulted powder was comprising $MgTiO_3$ as main phase and MgTi2O5. The product was mainly composed of polyhedral particles, and the average particle size calculated using an SEM photograph was 5.1 μm. The BET specific surface area was 0.42 $m^2$/g. The particle size calculated from the BET specific surface area was 3.7 μm, and (average particle size based on SEM photograph)/(particle size calculated from BET specific surface area) was 1.4. The refractive index of the resulted powder was measured by a method in which a sample was embedded in a medium having high refractive index and Becke line was observed by an optical microscope. The obtained refractive index was 2.2 to 2.3. The resulted magnesium titanate powder can be mixed with a glass having low melting point and calcined in the same manner as in Example 1. The dielectric constant of the resulted pellet calculated is 14.

Example 3

The powder (mixture of titanium tetrachloride precipitation and magnesium hydroxide) used in Example 1 was calcined at 1100°C for 30 minutes using the same furnace as in Example 1 at a temperature ramp rate of 10°C/min. while flowing air at 100 ml/min. The X-ray diffraction measurement showed that the resulted powder was comprising $MgTiO_3$ as main phase and the main peak strength ratio of $MaTiO_3$:$MgTi_2O_5$:$TiO_2$ was 93:2:5. The average particle size calculated using an SEM photograph was 0.51 μm. The BET specific surface area was 2.1 m²/g. The particle size calculated from the BET specific surface area was 0.73 μm, and (average particle size based on SEM photograph)/(particle size calculated from BET specific surface area) was 0.7. The resulted magnesium titanate powder can be mixed with a glass having low melting point and calcined in the same manner as in Example 1. The dielectric constant of the resulted pellet calculated is 14.

Example 4

A-100 (trade name)(462 g) which is a commercially available anatase type titanium dioxide powder manufactured by Ishihara Sangyo Kaisha Ltd. and high purity magnesium hydroxide ( (344 g)200-06 H manufactured by Kyowa chemical Industry Co., Ltd.) were charged into a 10 L polyethylene pot together with 9.7 kg of plastic balls containing iron cores, and they were ball milled in dry condition for 2 hours. The powder recovered from the ball mill was charged into an alumina vessel, and calcined in air at 1100°C for 1 hour. The powder (690 g) taken out from the furnace was ground under the condition of air pressure of 6 kg/cm² using Jet Mill (PJM-100SP: manufactured by Nippon Pneumatic MFG. Co., Ltd.. The X-ray diffraction measurement showed the powder contained only MgTiO₃. The average particle size calculated using an SEM photograph was 0.42 μm. The BET specific surface area was 3.7 m²/g. The particle size calculated from the BET specific surface area was 0.42 μm, and (average particle size based on SEM photograph)/(particle size calculated from BET specific surface area) was 1.0.

The resulted magnesium titanate powder (2 g) and glass powder ((8 g)ASF-1340 manufactured by Asahi Glass Co.) having a glass transition temperature of as low as 420°C were ball milled for 1 hour using alumina balls and a 250 ml polyethylene pot. The resulting mixed powder was pressed into a pellet at a pressure of 300 kg/cm² using a 13 mm ∅ die . A temperature ramp rate was 5°C/min. and the pellet was calcined at 600°C for 20 minutes in air. The dielectric constant of the resulting pellet was measured using RF impedance analyzer 4291A and sample holder 16453A manufactured by Hewlett Packard Co. As a result, the dielectric constant was 14.7 at 10 MHz, 15 even at 1 MHz, and the dielectric loss was 0.0017 at 10 MHz. The calculated dielectric constant is 14.

Example 5

A-100 (trade name)(462 g) which is an anatase type titanium dioxide manufactured by Ishihara Sangyo Kaisha Ltd. and 200-06 H (trade name)(344 g) which is magnesium hydroxide manufactured by Kyowa chemical Industry Co., Ltd. were weighed and charged into a 10 L polyethylene pot. 9.7 kg of plastic balls containing iron cores having a diameter of 15 mm ware charged into this pot, and they were ball milled in dry condition for 2 hours. The resulted mixture was calcined in air at 1100°C for 1 hour to obtain a magnesium titanate powder. The resulted powder was ground at an air pressure of 6 kg/cm² using Jet Mill (PJM-100SP: manufactured by Nippon Pneumatic MFG Co., Ltd. The X-ray diffraction measurement showed that the resulted powder was MgTiO₃. The BET specific surface area of the resulted powder was 3.7 m²/g, and the particle size based on an SEM photograph was 0.4 μm.

The above-mentioned titanium dioxide powder A-100 (462 g) and magnesium hydroxide powder 200-06H (344 g) and further the resulted magnesium titanate powder (80 g) were ball milled in dry condition for 2 hours using the above-mentioned 10 L polyethylene pot and plastic balls containing iron cores to obtain a mixed raw material. The mixed raw material (830 g) was charged into a quartz glass boat, and calcined in a furnace having a opaque quartz tube with temperature ramp rate og 5°C/min.. An atmosphere was air until 400°C. At 400°C, a gas mixture of 30 vol% of hydrogen chloride and 70 vol% of nitrogen were introduced, and calcined at 1000°C for 30 minutes. And then the atmosphere was changed to air to remove chlorine, and further calcined at 1000°C for 1 hour, then, cooled. The powder taken out from the furnace was ground by the above-mentioned Jet Mill (PJM-100SP). The X-ray diffraction measurement showed that the resulted powder was composed of MgTiO₃ single phase. It was mainly composed of polyhedral particles, and the average particle size calculated using an SEM photograph was 2.0 μm. The BET specific surface area was 0.68 m²/g. The particle size calculated from the BET specific surface area is 2.3 μm, and (average particle size based on SEM photograph)/(particle size calculated from BET specific surface area) is 0.87.

Comparative Example 1

CR-EL (trade name) which is a commercially available rutile type titanium dioxide powder manufactured by Ishihara Sangyo Kaisha Ltd. (BET specific surface area: 6.8 m²/g, particle size calculated from the BET specific surface area: 0.21 μm, particle size based on SEM: 0.2 μm) was mixed with glass having lower melting point in the same manner as in Example 1 and calcined. The density of the resulted pellet was 4.92 g/cm² (relative density: 98.8%). The dielectric constant of the pellet was calculated in the same manner as in Example 1 was 21 providing the dielectric constant of the titanium dioxide was 100. The dielectric constant at 10 MHz measured in the same manner as in Example 4 was 20.1, and at 1 MHz was 20.

Comparative Example 2

A-100 (trade name)(462 g) which is an anatase type titanium dioxide manufactured by Ishihara Sangyo Kaisha Ltd. and 200-06 H (trade name)(338 g) which is magnesium hydroxide manufactured by Kyowa Chemical Industry Co., Ltd. were weighed and charged into a 10 L polyethylene pot. 9.7 kg of plastic balls containing iron cores having a diameter of 15 mm ware charged into this pot, and they were ball- milled in dry condition for 2 hours. The resulted mixture was calcined in air at 700°C for 1 hour. The X-ray diffraction pattern of the resulted powder was measured. As a result, the maximum peak ratio of titanium dioxide (anatase) to magnesium oxide was 9:1, and no peak of magnesium titanate was recognized.

Table 1

| | SEM particle size(1) | BET particle size(2) | (1)/(2) | Calculated value of glass-added $\varepsilon$ | Mesured value of glass-added $\varepsilon$ |
|---|---|---|---|---|---|
| Example 1 | 1.8 | 2.8 | 0.6 | 14 | - |
| Example 2 | 5.1 | 3.7 | 1.4 | 14 | - |
| Example 3 | 0.51 | 0.73 | 0.7 | 14 | - |
| Example 4 | 0.42 | 0.42 | 1.0 | 14 | 14.7 |
| Example 5 | 2.0 | 2.3 | 0.87 | - | - |
| Comparative example 1 | 0.2 | 0.21 | 1.0 | 21 | 20.1 |

**Claims**

1. A glass paste comprising a magnesium titanate powder.

2. The glass paste according to Claim 1, wherein the magnesium titanate powder has a primary particle size based on a SEM photograph of from 0.1 $\mu$m or more to 10 $\mu$m or less, and a BET specific surface area of from 0.1 $m^2$/g or more to 10 $m^2$/g or less.

3. The glass paste according to Claim 2, wherein the magnesium titanate powder is a powder having a value obtained by dividing the primary particle size based on a SEM photograph by a primary particle size calculated from the BET specific surface area of from 0.1 or more to 5 or less.

4. The glass paste according to Claim 2, wherein the particle of the magnesium titanate powder has a polyhedral form having substantially no fractured surface.

5. A method for producing a magnesium titanate powder wherein titanium dioxide or a precursor which is converted to titanium dioxide by calcining is mixed with magnesium oxide or a precursor which is converted to magnesium oxide by calcining, and said mixture is calcined at a temperature from 600 to 1200°C in an atmosphere containing at least one gas selected from the following (a) to (c):

   (a) Hydrogen chloride,
   (b) Component prepared from molecular chlorine and steam,
   (c) Molecular chlorine.

6. The glass paste according to Claim 1, wherein the magnesium titanate powder is a powder obtained by the production method of Claim 5.

7. A glass paste obtained by adding organic material(s) to a composition comprising the magnesium titanate powder of from 1 wt% or more to 80 wt% or less according to Claim 2 compounded into a low melting point glass powder having a glass transition temperature of 500°C or less.

8. A plasma flat panel display made of the glass paste according to Claim 1.